# EUROPEAN PATENT APPLICATION

(11) **EP 4 456 498 A1**
(43) Date of publication of application: **30.10.2024**
(21) Application number: 23179612.9
(22) Date of filing: 15.06.2023
(51) Int. Cl.: H04L 43/0852, H04J 3/06

(54) **A MODULE FOR A COMMUNICATION DEVICE, A CORRESPONDING COMMUNICATION DEVICE, AND A METHOD FOR THE MODULE**

(30) Priority: 27.04.2023 IN 202311030340
(71) Applicant: NXP B.V., 5656 AG Eindhoven (NL)
(72) Inventor: Axer, Philip, 5656 AG Eindhoven (NL); Sahukar, Panchakshari Kallappa, 5656 AG Eindhoven (NL)
(74) Representative: Schmütz, Christian Klaus Johannes

(57) **Abstract**

The present invention relates to timestamp module of a communication device, the timestamp module is able to allocate a reception time of a frame a transceiver just to the relevant, received frames, while a data processing unit is allocated between the transceiver and the timestamp module. The present invention also relates to the communication device and a method for the timestamp module.

## Description

### TECHNICAL FIELD

The present disclosure relates to a module for a communication device, a corresponding communication device, and a method for the module.

### BACKGROUND

Several devices, especially electronic devices, can be coupled via a network connection. Each device may comprise an internal clock. The internal clocks of the devices may help or even be necessary to ensure that certain operations are performed efficiently over the network connection, such as the transmission of messages over the network connection via frames from one device to another device. A frame may also be referred to as a packet, or vice versa. Efficient transmission can be achieved if the internal clocks of the device are synchronized. Synchronization can be performed over the network connection, such as by an exchange of messages between the devices. Each message may contain information about the internal clock of the sender device. The transmission of messages may involve latency, depending on the design of the network connection between two devices, and the duration of the latency may vary. The latency is often subj ect to some variation in its duration. Preferably, latency refers to the running time of a frame. Latency may refer to the running time of the frame between two (arbitrary) locations. In an example, the latency may refer to a running time of a transmission of a frame over the network connection between two devices. The latency may depend on the network connection and/or the protocols applied and/or the devices used. In an example, the latency of a frame for transmission from a transmitter device to a receiver device may vary considerably if the IEEE 802.3 Ethernet protocol is used. The synchronization of the internal clocks of the devices may be improved, for example, by using specific protocols and/or strategies. In an example, the use of IEEE 1588 Precision Time Protocol (PTP) may improve and/or ensure synchronization of the internal clocks of the devices. In addition, strategies may be used to estimate the latency of transmitting specific frames between two devices over the network connection. These strategies may be based on timestamps of the frames.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Aspects of the disclosure are defined in the accompanying claims.

In accordance with an aspect of the present disclosure, a computer program is provided, comprising executable instructions which, when executed by a processing unit, cause the processing unit being configured to carry out the method of a previous mentioned aspect and/or one or more embodiments thereof.

### DESCRIPTION OF DRAWINGS

Embodiments of the present disclosure will be described in more detail with reference to the appended drawings. It is to be noted, however, that the appended drawings illustrate only typical embodiments of this invention and are therefore not to be considered limiting of its scope, for the invention may admit to other equally effective embodiments. Advantages of the subject matter claimed will become apparent to those skilled in the art upon reading this description in conjunction with the accompanying drawings, in which like reference numerals have been used to designate like elements, and in which:
Figure 1 shows a simplified block diagram of a system
Figure 2 shows a simplified block diagram of a node.
Figures 3, 4 and 6 each shows a simplified block diagram of a communication device including a timestamp module.
Figures 5 and 7 each show data blocks.
Figure 8 shows a simplified flow chart of a method for the timestamp module.

### DESCRIPTION OF EMBODIMENTS

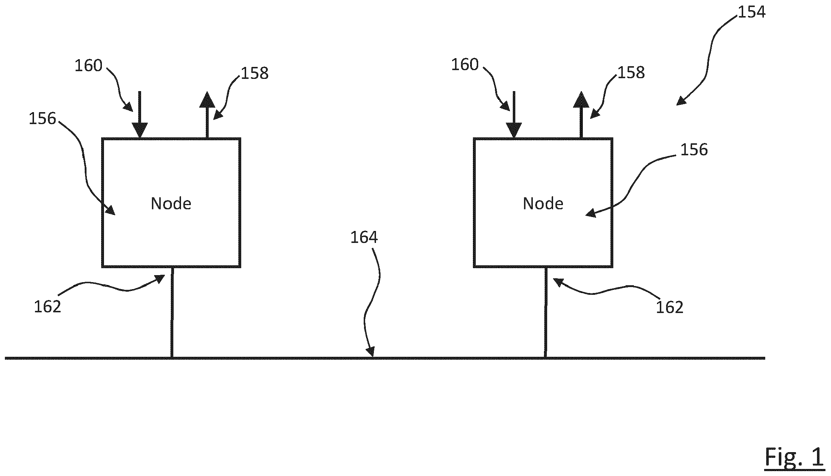

Figure 1 schematically illustrates an example of a communication system 154. The communication system 154 may comprise a plurality of nodes 156, each coupled to a network 164. Each node 156 may be configured and/or referred to as a communication device. The network 164 is preferably a wired network, such as an Ethernet network. The network 164 is preferably a part of the communication system 154. Each node 156 may comprise a network interface 162. Each node 156 may send messages or receive messages via the network interface 162. The network interface 162 may be configured for bidirectional communication. Each message may be formatted according to and/or comply with a predefined network protocol. In addition, each node 156 comprises a receive data, RXD, interface 158 and a transmit data, TXD, interface 160. The RXD interface 158 is used to receive data, such as Controller Area Network, CAN, frames or frames in another format. At least the payload of the this data may be previously received via another frame at the network interface 162. The data received at the network interface 162 may be formatted to and/or comply with another predefined protocol as for the RXD interface 158 and/or the TXD interface 160. In an example, the network interface may be configured to transmit and/or receive data formatted according to and/or complying with a / another network protocol, such as an Ethernet protocol. An data packet according to an Ethernet Protocol may be considered as an frame, that can be sent and/or received at the network interface 162. The TXD interface 160 is used to send data, such as CAN frames or frames in another format. The node 156 may process data it receives via the TXD interface 160 and then output the processed data, via the network interface 162, over the network 164. The data received via the RXD interface 158 and/or the data sent via the TXD interface 160 may comply with a (further) communication protocol.

The nodes 156 may communicate by exchanging messages (e.g., frames) over the network 164. A message to be sent over the network 164 may include and/or be formed of at least one frame. Each frame may include a series of words, each of which may be formed from a plurality of bits. The number of bits per word may be predefined, for example, 64 bits per word. The frames may comply with a predefined specification, such as a network protocol, for example, an Ethernet protocol. For certain uses of the system 154, such as time-critical applications, it may be useful to synchronize the internal clocks of the nodes 156. The synchronization may be performed over the network 164. For this purpose, frames may be exchanged between nodes 156, with each frame used for this purpose representing a timestamp. The timestamp of a frame may represent the time according to the internal clock of the node 156 at which the frame is sent by the node. By exchanging frames, each representing a timestamp, between nodes 156, nodes 156 may determine the time duration and consequently the time delay (latency) required for a frame to travel from one node 156 to another node 156. By exchanging frames, each representing a timestamp, between all nodes 156, particularly a predetermined group of nodes 156, each of the nodes 156 can determine the latency to each other node 156. In addition, the nodes 156 can perform synchronization of internal clocks via the frames, each representing a timestamp. If many nodes 156 are coupled to a network 164 and/or if the nodes 156 are spaced apart, the latency of the frames conveyed between different pairs of nodes 156 may vary.

To improve the security of transmitting frames over a network connection, cryptographic techniques can be applied to the frames or at least a portion of the frames. For example, by applying the IEEE 802.1AE MACsec protocol, frames can be encrypted by one of the nodes 156, referred to as a sender node 156, so that the sender node 156 sends encrypted frames. Another node 156, referred to as a receiver node 156, can decrypt the encrypted frame. The frame may be decrypted at the receiver node 156, for example, by applying the IEEE 802.1AE MACsec protocol.

As a result, frames used to synchronize internal clocks can also be transmitted encrypted between the node 156. This encryption of frames used to synchronize the clocks can cause difficulties in the implementation of a time synchronization protocol, such as the PTP protocol. The duration of encryption and decryption may vary, resulting in varying latency of transmission of the frames used to synchronize the internal clocks of the nodes 156. The varying latency may reduce the accuracy of the synchronization of the internal clocks of the nodes 156. Decreased accuracy of the synchronization may result in a decreased transmission rate over the network 164. Against this background, the incorporation of a timestamp into a frame should represent the time as close as possible to the time at which the frame is sent by a sender node 156. At the receiver node 156, the capturing of the timestamp should take place as close as possible to the time at which the frame is received by the receiver node 156.

Furthermore, if an encrypted frame is corrupted, for example, at the network between the sender node 156 and the receiver node 156, an error may occur in decrypting the frame at the receiver node 156. In this case, the receiver node 156 may drop the frame that cannot be decrypted correctly. For each frame received by a receiver node 156, the receiver node 156 may generate a timestamp. The timestamp may be generated by the receiver node 156 for a received frame before that frame is possibly decrypted. On the transmission path over the network 164 from the sender node 156 to the receiver node 156, a frame may be corrupted such that the frame cannot be decrypted without error. For example, if an originally encrypted frame is received over the network 164 by the receiver node 156, the aforementioned corruption may cause the receiver node 156 to be unable to correctly decrypt the received frame. In this case, the receiver node 156 may have generated a timestamp for the received frame but due to the fact that the receiver node 156 cannot correctly decrypt the received frame, the receiver node 156 will drop the received frame. Against this background, there is a need at the receiver node to be able to allocate the actual related timestamp to a decrypted frame. Confusion of timestamps generated by a receiver node 156 due to the possible dropping of a received node should be avoided. Furthermore, dropping a frame shall be handled in the receiver node 156, which may prevent difficulties in synchronizing the internal clocks of the nodes 156.

The basic idea for solving the aforementioned needs is based on the approach that, first, for each frame received by a node 156, the time at which the respective frame is received is recorded as a precautionary measure. In response to receiving a frame, a character string unique to the respective frame, such as a unique identification number, is to be generated. The character string is associated with the captured time. The time, the character string and the allocation are stored as a precaution for later, possible use. The received frame and the allocated character string are processed together in the node 156 after the frame is received. In case the received frame is dropped with the (partial) processing, the allocated time of receiving the frame is no longer needed. In the case where the received frame is processed (without being dropped), the associated character string is used to associate the processed frame with the stored time detected for the initially captured frame. As a result, both needs are solved, namely that the times of receiving frames can be detected and that a possible dropping of a (single) frame does not result in a wrong allocation of times of receiving frames.

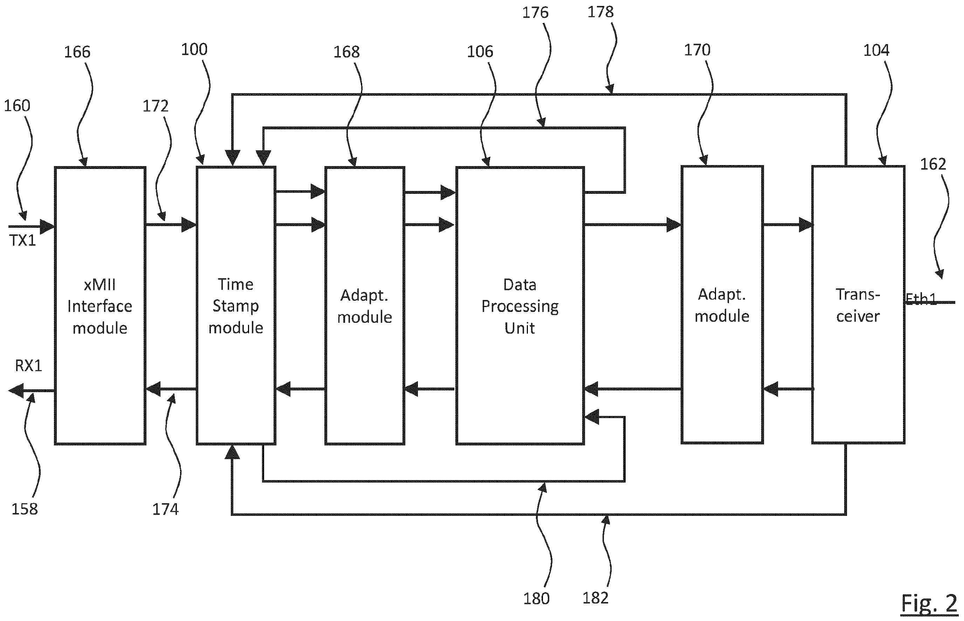

Figure 2 schematically illustrates an example of a node 156 comprising an interface module 166, a timestamp module 100, a first adapter module 168, a data processing unit 106, a second adapter module 170, and a transceiver 104 coupled together in a series. The coupling forms a TXD signal path 172 from the TXD interface 160 to the transceiver 104 and an RXD signal path 174 from the transceiver 104 to the RXD interface 158. The timestamp module 100 may also be referred to as a module 100.

The interface module 166 may also be referred to and/or configured as a media independent interface (MII) module 162. The interface module 166 may form the TXD interface 160 and the RXD interface 158.

The timestamp module 100 may be configured to modify a frame in the TXD path so that the frame represents a timestamp. The timestamp may be used to synchronize the internal clocks of a plurality of nodes 156 if those plurality of nodes 156 are coupled together via the network 164.

The first adapter module 168 may be configured to divide a frame transmitted over the TXD path 172 to the first adapter module 168 into a plurality of words. Each word comprises a predefined number of bits, such as 64 bits. The first adapter module 168 may further be configured to sequentially transmit the words of the frame to the data processing unit 106. In an example, the first adapter module 168 may transmit the bits of a word to the data processing unit 106 in parallel in time. As a result, the first adapter module 168 may transmit the words of the frame to the data processing unit 106 one word at a time.

The interface module 166 and/or the timestamp module 100 may each operate according to the FIFO principle. The FIFO principle may be performed in the interface module 166 and/or in the timestamp module 100 at the bit level, word level, or frame level.

The second adapter module 170 may be configured to receive sequentially words of a frame over the TXD path 172. In an example, the second adapter module 170 may be configured to create a frame, which may also be referred to as a data packet, from received words. The created frame, such as the created data packet, may be transmitted from the second adapter module 170 to the transceiver 104 via the TXD path 172.

The transceiver 104 may be configured to receive the created frame, such as the data packet, via the TXD path 172. Further, the transceiver 104 may be configured to modify the created frame, such as the created data packet, so that the modified data packet complies with a predefined communication protocol, for example a network protocol such as an Ethernet protocol. After modification, the transceiver 104 may send the modified data packet over the network interface 162. The transceiver 104 may also be referred to as a network transceiver or a network phy.

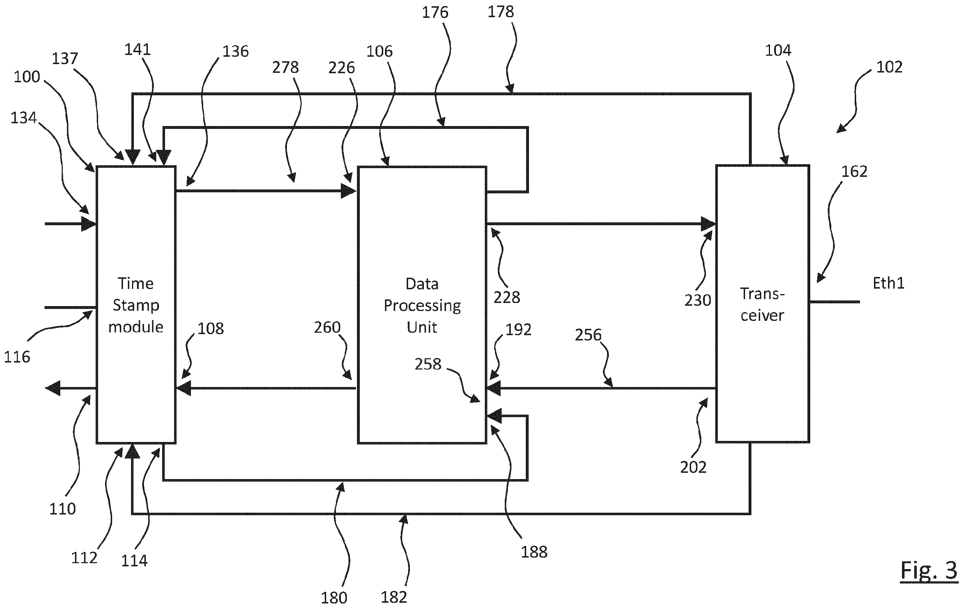

As can be seen from Figures 2 and 3, the data processing unit 106 is coupled between the first adapter module 168 and the second adapter module 170. To continue the TXD path 172, the data processing unit 106 comprises a TXD input interface 226 and a TXD output interface 228. The data processing unit 106 may be configured to receive words of a frame via the TXD input interface 226. The data processing unit 106 may further be configured to transmit (other) words to the second adapter module 170 via the TXD output interface 228.

In an example, the adapter module 168 and the further adapter module 170 may each be a component of the data processing unit 106. In another example, the adapter module 168 and the further adapter module 170 may not be necessary. Therefore, in both examples, it may be provided that the data processing unit 106 is arranged between the timestamp module 100 and the transceiver 104. Although the adapter modules 168, 170 are not shown in the examples of Figures 3, 4 and 6, it may optionally be provided that the adapter modules 168, 170 each form a part of the data processing unit 106 or that the adapter modules 168, 170 may be provided for a node 156 as in Figure 2.

In an example, the timestamp module 100 may be formed and/or replaced by a module according to the following explanations and/or according to the accompanying claims.

In an example, the timestamp module 100, the data processing unit 106, and the transceiver 104 may form a communication device 102 and/or may be referred to as the communication device 102. The communication device 102 may further comprise the module 166, in which case the communication device 102 may be referred to as a node 156.

Figure 3 illustrates an example of the communication device 102. The communication device 102 comprises the module 100 according to the following explanations and/or according to the accompanying claims. The module 100 may be referred to as the timestamp module 100.

In principle, it is possible that the timestamp module 100 may be a separate module 100 that can be used in another technical system or environment. As a result, the following explanations may apply to both an example in which the timestamp module 100 is configured as a separate module 100 and/or an example in which the timestamp module 100 forms a part of the communication device 102. If advantageous explanations, example features, technical effects and/or advantages are explained below for an example of the timestamp module 100 forming a part of the communication device 102, the corresponding explanations, example features, technical effects and/or advantages may also apply in an analogous manner to an example of the timestamp module 100 that does not form part of the communication device 102 but being configured separately.

The timestamp module 100 may be used for a communication device 102. The communication device 102 preferably comprises a transceiver 104. The transceiver may also be referred to as a transceiver 104. The transceiver 104 may be configured to communicate with a network 164, such as an Ethernet network. Therefore, the transceiver 104 may also be referred to as a transceiver 104. The transceiver 104 may comprise an Ethernet physical layer (Ethernet PHY). The communication device 102 further comprises a data processing unit 106. The data processing unit 106 may be configured to process a frame according to a predefined protocol, in particular a communication protocol, such as the MACSec protocol. The predefined protocol may be implemented by the data processing unit 106.

The timestamp module 100 comprises an interface 108 configured to receive data, which may also be referred to as receive data, from the data processing unit 106. The interface 108 may also be referred to as the receive data, RXD, input interface 108.

The timestamp module 100 comprises another interface 110 configured to transmit receive data. The interface 110 may also be referred to as the RXD output interface 110. The timestamp module 100 may transmit the receive data to the interface module 166 along the RXD path 174.

The timestamp module 100 comprises another interface 112 configured to receive a signal, which may also be referred to as a first trigger signal, from the transceiver 104. The interface 112 may also be referred to as the first trigger interface 112.

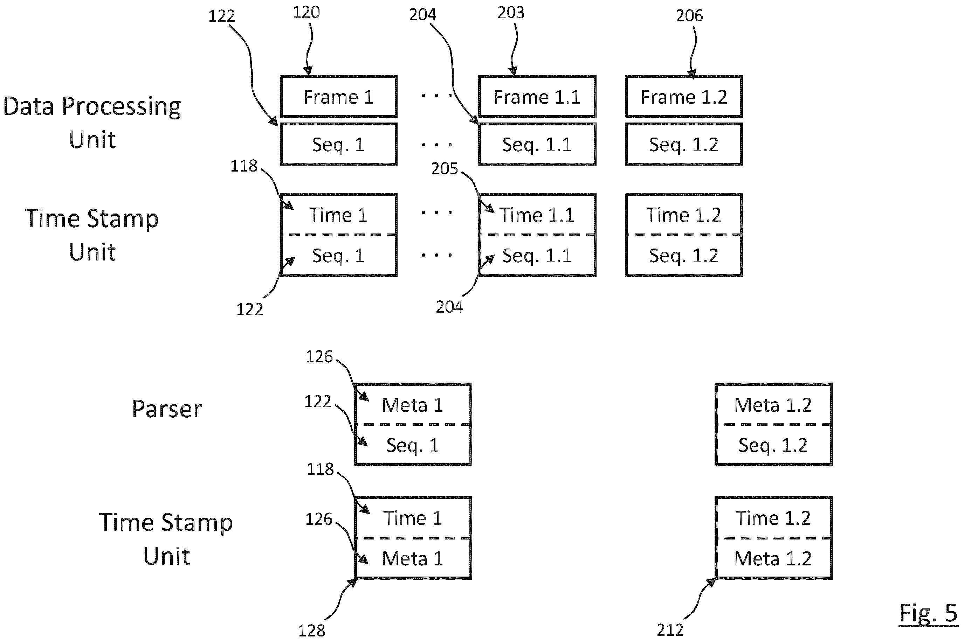

The timestamp module 100 comprises another interface 114 configured to transmit data representing a character string. The character string may comprise a sequence of characters, such as numeric expressions and/or alphabetic expressions. The character string may therefore also be referred to as a character chain. In simplified terms, the interface 114 may be configured to transmit the character string. The interface 114 will also be referred to as the first character interface 114. The character string may also be referred to as the first character string 122. An example of the first character string 122 is represented as a data block in Figure 5.

The timestamp module 100 may comprise another interface 116 configured to receive and/or transmit data. The data may be used to synchronize the internal clocks and/or represent a received frame and the allocated time of receipt of the respective frame. The interface 116 may also be referred to as the control interface 116.

In the example of the communication device 102 of Figure 3, the transceiver 104 comprises an interface 162, which may be referred to as a network interface 162. The transceiver 104 may be coupled to a network 164 via the network interface 162 to send and/or receive frames, particularly in the form of data packets, over the network 164. The network interface 162 may be configured for bidirectional communication, such as sending a frame and/or receiving a (different) frame. The transceiver 104 may be configured to generate a first trigger signal if the transceiver 104 receives a frame over the network interface 162. In an example, the transceiver 104 generates the first trigger signal directly after and in response to receiving the frame over the network interface 162. Upon generation of the first trigger signal, the transceiver 104 may transmit the first trigger signal to the interface 112 of the time stamp module 100.

The timestamp module 100 is configured, in a step a), to receive the first trigger signal at the first trigger interface 112. The first trigger signal represents a first time 118 of a reception of a frame at (at the network interface 162 of) the transceiver 104. The first time 118 is schematically shown as a data block in an example shown in Fig. 5. The received frame may be referred to as a first RXD frame 120. The first RXD frame 120 is schematically shown as a data block in the example shown of Fig. 5. The first RXD frame 120 comprises a plurality of bits. The first RXD frame 120 may satisfy a first predefined protocol, in particular a first predefined network protocol, such as an Ethernet protocol.

In an example, the first trigger interface 112 of the timestamp module 100 is coupled to the transceiver 104 via a signal link 182. The transceiver 104 may transmit the first trigger signal to the first trigger interface 112 of the timestamp module 100 via the signal link 182. As previously discussed, the transceiver 104 may generate and/or transmit the first trigger signal to the first trigger interface 112 temporally directly after receiving the first RXD frame 120 and/or in response to receiving the first RXD frame 120. In an example, the first trigger signal 112 may represent the first time 118 at which the transceiver 104 receives the first RXD frame 120 at the network interface 162. In another example, the first trigger signal 112 may indirectly represent the first time 118 of receiving the first RXD signal 120, rather than directly. If the transceiver 104 generates and transmits the first trigger signal temporally directly after receiving the first RXD frame 120, the time at which the timestamp module 100 receives the first trigger signal at the first trigger interface 112 may also represent the first time 118 sufficiently accurately. In an example, the timestamp module 100 may subtract a (small) predefined processing time from the time of receiving the first trigger signal to determine the first time 118. Also in this example, it may be assumed that the first trigger signal represents the first time 118 at least indirectly.

Via the first trigger signal, the timestamp module 100 may receive information about the first time 118 of a reception of a first RXD frame 120 by the transceiver 104 (at the network interface 162) without the timestamp module 100 having to be integrated into the transceiver 104. Rather, the data processing unit 106 may be disposed between the transceiver 104 and the timestamp module 100.

The transceiver 104 may be coupled to a port 192 of the data processing unit 106 via a signal link 256. The port 192 may be referred to as an input port 192. The transceiver 104 may be configured to transmit the received, first RXD frame 120 to the input port 192 of the data processing unit 106 via the signal link 256. The input port 192 may form part of a (further) RXD input interface 258 of the data processing unit 106.

The timestamp module 100 is configured, in a step b), to generate a first character string 122 in response to receiving the first trigger signal. In an example shown in Fig. 5, the first character string 122 is schematically shown as a data block. The first character string 122 may be formed from a sequence of characters. The first character string 122 may be a unique, first character string 122. As a result, the first character string 122 may serve and/or be configured for identification. In an example, the timestamp module 100 generates the first character string 122 temporally directly after and in response to receiving the first trigger signal. The timestamp module 100 may be configured to allocate the first character string 122 with the first time 118, and/or vice versa. The first character string 122 may be used and/or configured to uniquely identify the first time 118. The timestamp module 100 may further be configured to store the first character string 122, the first time 118, and the allocation between the first character string and the first time. As a result, the timestamp module 100 may determine the first time 118 based on the first character string 122.

In a step c), the timestamp module 100 is configured to send the first character string 122 to the data processing unit 106 via the first character interface 114. In an example, the timestamp module 100 sends the first character string 122 to the data processing unit 106 via the first character interface 114 temporally directly after and in response to generating the first character string 122. The first character interface 114 may be coupled to a (further) port 188 of the data processing unit 106 via a (further) signal link 180. The timestamp module 100 may transmit the first character string 122 to the data processing unit 106 via the first character interface 114, the signal link 180, and the port 188. The port 188 may form a part of the RXD input interface 258 of the data processing unit 106.

The data processing unit 106 may receive the first RXD frame 120 from the transceiver 104 via the port 192 of the RXD input interface 258. The data processing unit 106 may receive the first character string 122 via the port 188 of the RXD input interface 258. It is assumed that the possibly existing, temporal delay between the reception of the first RXD frame 120 at the port 192 and the reception of the first character string 122 at the port 188 is very small, so furthermore it is assumed that the data processing unit 106 can receive both, the first RXD frame 120 and the first character string 122 at the same time at the RXD interface 288. This is assumed to be true even if the aforementioned small time delay occurs. As a result, the first RXD frame 120 and the first character string 122 may be processed in parallel by the data processing unit 106. The data processing unit 106 may be configured to generate a first data frame based on the first RXD frame 120. The first data frame may comprise a plurality of bits. The first data frame may satisfy the first protocol (such as the first RXD frame) or another predefined protocol, for example another communication protocol, such as a CAN protocol. If the first RXD frame 120 is (fully or partially) encrypted, the data processing unit 106 may generate the first data frame by decrypting the first RXD frame 120. For decryption, the data processing unit 106 may, in an example, rely on the MACSec implementation. However, the first data processing unit 106 is not limited to decrypting data. In an example, the data processing unit 106 may also perform other predefined process steps to generate the first data frame based on the first RXD frame 120. The data processing unit 106 may be configured to route the first character string 122 received at the port 188 through the data processing unit 106 parallel in time with the processing of the RXD frame 122, such that both the first data frame and the routed first character string 122 may be sent (parallel in time) through an RXD output interface 260 of the data processing unit 106. The RXD output interface 260 may be coupled to the RXD input port 108 of the timestamp module 100 via a (further) signal link 270. If the data processing unit 106 sends both the first data frame and the first character string 122 via the RXD output interface 260, both the first data frame and the first character string 122 may be transmitted in parallel in time to the RXD input interface 108 of the timestamp module 100 via the signal link 270.

The timestamp module 100 is configured to receive both the first data frame and the first character string 122 simultaneously at the RXD input interface 108 in a step d). Further, the timestamp module 100 is configured to read metadata 126 of the first data frame in a step e). The read metadata of the first data frame may also be referred to as first metadata. In an example shown in Fig. 5, the first metadata 126 is schematically shown as a data block. The first metadata 126 of the first data frame may refer to address data, identification data, and/or other data of the first data frame suitable for identifying the first data frame. In an example, the first metadata 126 of the first data frame is assumed to correspond to metadata of the first RXD frame 120. Therefore, in an example, the first metadata 126 may serve to identify both the first data frame and the first RXD frame 120. In an example, the data processing unit 106 may be configured to generate the first data frame based on the first RXD frame 120 such that the first metadata 126 is suitable for identifying both the first data frame and the first RXD frame 120.

As previously discussed, the timestamp module 100 may be configured to determine the first time 118 based on the first character string 122. In an example, the timestamp module 100 may determine the first time 118 based on the first character string 122 received by the timestamp module 100 via the RXD input interface 108 in step d). The timestamp module 100 is configured to allocate the (determined) first time 118 with the (read out) first metadata 126 in step f) such that the allocation results in a first data group 128, the first data group 128 comprising the (determined) first time 118 and the (read out) first metadata 126. The first data group 128 may be used to synchronize internal clocks of nodes 156 of a system 154.

The timestamp module 100 is preferably configured to provide and/or transmit the first data group 128 via the control interface 116 in a preferably optional step g). The timestamp module 100 may transmit the first data group 128 to a control unit of a node 156 via the first control interface 116. The transmission may comprise the control unit retrieving the first data group 128 from the timestamp module 100. In an example, the node 156 may comprise the timestamp module 100.

Synchronization of the internal clocks of the nodes 156 may be based on timestamps and/or each representing a point in time. This point in time may also be referred to as a reference time. One of the nodes 156 of the system 154, as shown schematically in Figure 1 for example, may transmit such a frame to the other node 156 of the system 154, the frame representing a time stamp. The frame may be configured according to precision time protocol, PTP.

During operation of the system 154, not every frame exchanged between two nodes 156 may represent a timestamp. In an example, it is possible that only one exchanged frame of multiple frames exchanged between nodes 156 represents a timestamp. Against this background, it may be appropriate for step g) to be performed in an example only if the bits of the first data frame and/or the bits of the first RXD frame represent a timestamp. The timestamp may be referred to as the first timestamp.

The timestamp module 100 may be configured to perform the following steps d.1) and d.2) between the step d) and the step g). The timestamp module 100 may be configured to detect, in step d.1), whether the first data frame and/or the bits of the first data frame represent a first timestamp. The timestamp module 100 may further be configured, in step d.2), to prevent and/or skip transmitting and/or providing the first data group 128 (see step g)) if it was detected in step d.1) that the first data frame and/or the bits of the first data frame represent the first timestamp. The timestamp module 100 may further be configured to additionally prevent and/or skip at least one of steps e) and f) in step d.2) if it was detected in step d.1) that the first data frame and/or the bits of the first data frame represent the first timestamp. By skipping and/or preventing step g) and optionally at least one of steps e) and f), the computational effort for the timestamp module 100 may be reduced.

In a step h), the timestamp module 100 is configured to send the first data frame via the RXD output interface 110. In an example, the timestamp module 100 may transmit the first data frame to the interface module 166 using the RXD output interface 110.

It was explained at the outset that the case may arise where an RXD frame is lost in the data processing unit 106, such that no corresponding data frame is subsequently generated. If an RXD frame is lost in the data processing unit 106, the consequence is that a character string received in parallel with the RXD frame is also lost at the data processing unit 106. Such a case is schematically illustrated as the example of Figure 5. For an example, it shall be assumed that another first RXD frame 203 is received by the transceiver 104. The transceiver 104 generates a further first trigger signal that is received by the timestamp module 100 in step a). In response to the received further first trigger signal, the timestamp module 100 generates a further first character string 204 in step b). The (further) first time 205 represented directly or indirectly by the further first trigger signal can be allocated by timestamp module 100 with the further first character string 204. This further character string 204 is sent by the timestamp module in step c) to the data processing unit 106, preferably to the port 188. In time parallel, the transceiver 104 sends the further first RXD frame 203 to the port 192, so that the data processing unit 106 receives both the further first RXD frame 203 and the further first character string 204 in parallel in time. In this example, it is to be assumed that the further first RXD frame 203 received by the data processing unit 106 via the port 192 is dropped at the data processing unit 106. As a result, the further first character string 204 is also dropped at the data processing unit 106. As a consequence of dropping both the further first RXD frame 203 and the further first character string 204, no (further) first data frame is generated at the RXD output interface 260 of data processing unit 106. As can be seen schematically from Figure 5, due to the dropped further first RXD frame 203, steps d) to h) are not performed by the timestamp module 100.

From Figure 5, another example of a (still) further first RXD frame 206 can be taken into account. For this (still) further first RXD frame 206, reference is made in an analogous manner to the explanations for the first RXD frame 120. It is assumed that the (still) further first RXD frame 206 is not dropped at the data processing unit 106. As a result, a (still) further first data group 212 is generated based on the (still) further first RXD frame 206. The (still) further first data group 212 can be used to determine the time of reception of the first RXD frame 206 by the transceiver 104 without error.

The timestamp module 100 has the advantage that a first data group 128, 212 can be generated for each first RXD frame 120, 206 received by the transceiver 104 that was not dropped by the data processing unit 106. Based on the first data groups 128, 212, the non-dropped first RXD frames 120, 206 can be identified as well as their respective allocated time of reception can be read. Also, since no first data group is created for each dropped first RXD frame 203, no confusion can occur. As a result, the use of the timestamp module 100 allows precise synchronization of the internal clocks of multiple nodes 156 across a network 164, and dropped frames 203 do not (cannot) have a negative impact on synchronization.

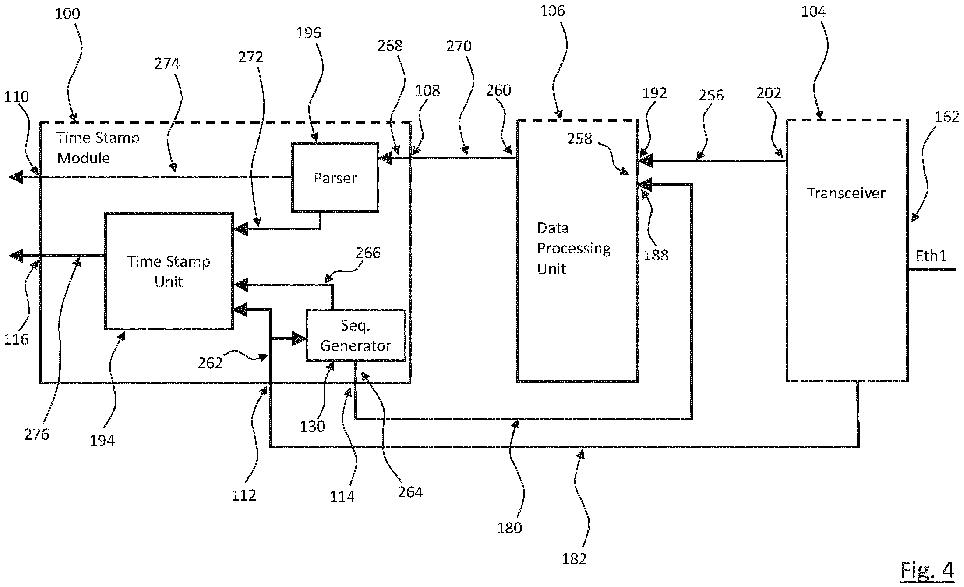

Figure 4 schematically illustrates a part of another example of the timestamp module 100 and/or the communication device 102. The dashed line in the schematic representation of the timestamp module 100 is to indicate that the timestamp module 100 is not fully shown. In Figure 4, preferably the part of the timestamp module 100 relevant to the RXD path 174 is shown schematically.

The timestamp module 100 may comprise a first generator 130. The first generator 130 may be configured to generate the first character string 122. In an example, the first trigger interface 112 is coupled to the first generator 130 via a signal link 262. If the timestamp module 100 receives the first trigger signal via the first trigger interface 112, the first trigger signal may be routed from the first trigger interface 112, preferably directly, to the first generator 130 via the signal link 262.

In an example, the first generator 130 is configured to perform step b). The first generator 130 may be configured to generate the first character string 122 temporally directly after and/or in response to receiving the first trigger signal.

The timestamp module 100 and/or the first generator 130 may be configured to perform step b) temporally directly after step a).

The first generator may be coupled to the first character interface 114 via another signal link 264. In an example, the first generator 130 is configured to perform step c). The first generator 130 may be configured to send the generated, first character string 122 to the data processing unit 106 via the first character interface 114.

The timestamp module 100 and/or the first generator 130 may be configured to perform step c) temporally directly after step b).

The timestamp module 100 may comprise a first time stamp unit 194. The first time stamp unit 194 may be coupled to the first trigger interface 112 via the signal link 262 (or another signal link not shown) such that if the timestamp module 100 receives the first trigger signal via the trigger interface 112, the first trigger signal may be routed from the first trigger interface 112, preferably directly, to the time stamp unit 194 via the respective signal link.

The time stamp unit 194 may be coupled to the first generator 130 via another signal link 266. The first generator 130 may be configured to transmit the first character string 122 to the first time stamp unit 194 via the signal link 266. This transmission may be timed to be performed by the first generator 130 directly after step b) and/or as a part of step c).

The first time stamp unit 194 may be configured to determine the first time 118 of a reception of a first RXD frame 120 based on the first trigger signal. The first time stamp unit 194 may determine the first time 118 by the time at which the first time stamp unit 194 receives the first trigger signal and/or the first character string 122. In either case, the first time 118 is caused by the first trigger signal, such that both of the above examples may preferably be understood as a representation of the first time 118 by the first trigger signal.

The timestamp module 100 may comprise a further unit 196, which may be referred to and/or configured as a parser 196. The parser 196 may also be referred to as the first parser 196. The first parser 196 may be coupled to the RXD input interface 108 of the timestamp module 100 via another signal link 268. The data processing unit 106 may be configured to transmit both the first data frame and the first character string 122 to the RXD input interface 108 of the timestamp module 100 via the RXD output interface 260 and the further signal link 270. Both the first data frame and the first character string 122 may be directed to the first parser 196 via the signal link 268.

The first parser 196 may be configured to direct the received, first data frame to the RXD output interface 110 of the timestamp module 100 via another signal link 274. The first parser 196 may therefore be configured to send the received, first data frame according to step h).

The first parser 196 may be configured to read the first metadata 126 from the received, first data frame according to step e). Further, the first parser 196 may be configured to transmit the received, first character string 122 and the first metadata 126 to the first time stamp unit 294 via a further signal link 272.

After the first time stamp unit 194 receives the first character string 122 and the first metadata 126 from the first parser 196 via the signal link 272, the first time stamp unit 194 may determine the first time 118 via the received, first character string 122, and subsequently allocate the determined, first time 118 with the first metadata 126. The allocation may allow the first time stamp unit 194 to form a first data group 128. The time stamp unit 194 may be coupled to the control interface 116 via another signal link 276. The first data group 128 may transmit and/or provide the first time stamp unit 194 via the first control interface 116. The first time stamp unit 194 may be configured to perform step g).

The previous explanations regarding the timestamp module 100, the data processing unit 106, and the transceiver 104 have been explained mostly in connection with a first RXD frame 120. As can further be seen from Figure 4, the part of the timestamp module 100 shown in Figure 4 relates in mostly to the RXD path 174, but it can further be seen from Figure 3 that in an example, the timestamp module 100 can also be used for the TXD path 172.

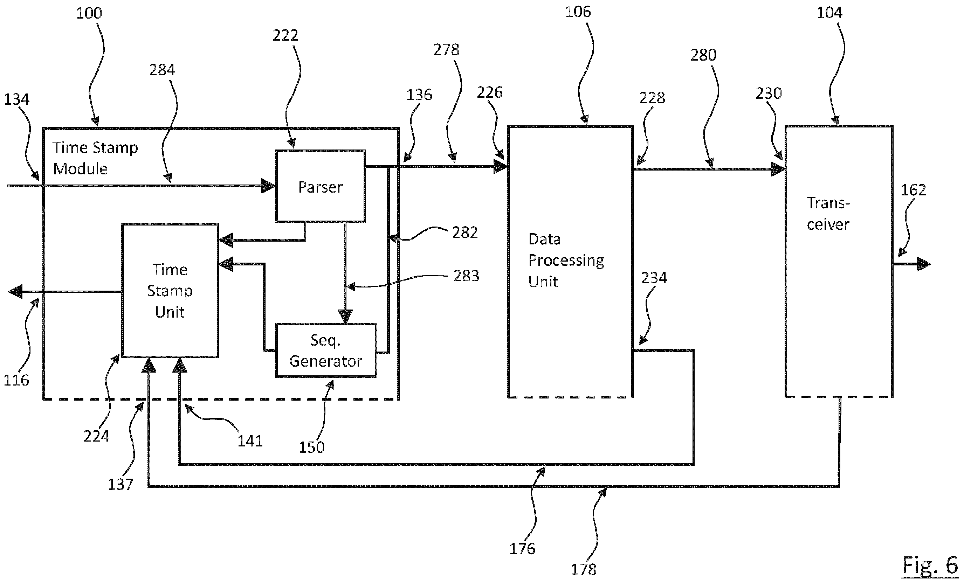

The preceding explanations, example features, technical effects, and advantages as explained for the timestamp module 100 in connection with the RXD path 174 may in an example apply in an analogous manner to the timestamp module 100 in connection with the TXD path 172. Figure 6 schematically illustrates another example of at least a part of the timestamp module 100 and/or a part of the communication device 102.

In an example, the timestamp module 100 comprises another interface 134 configured to receive data, wherein the data may also be referred to as transmit data, TXD. The interface 134 may also be referred to as the TXD input interface 134.

The timestamp module 100 may comprise another interface 136 configured for transmitting data. The interface 136 may also be referred to as TXD output interface 136.

The timestamp module may comprise another interface 137 configured to receive a signal that may also be referred to as a second trigger signal. The interface 137 may also be referred to as the second trigger interface 137.

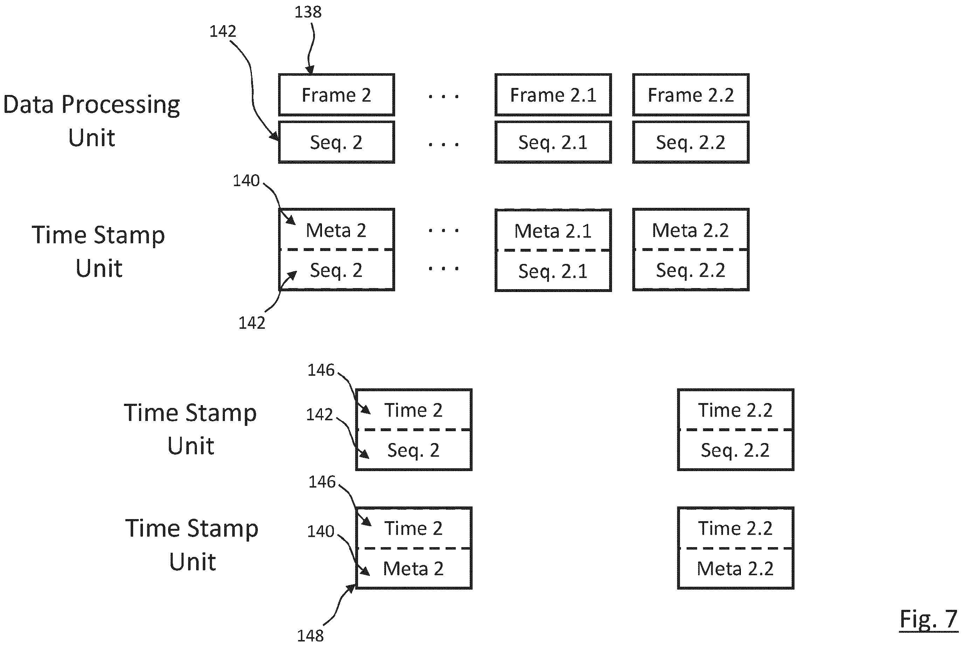

The timestamp module 100 may comprise another interface 141 configured to receive data representing a character string. The character string may also be referred to as a second character string 142. An example of the second character string 142 is represented as a data block in Figure 7. The second character string 142 may comprise a sequence of characters, such as numeric expressions and/or alphabetic expressions. In simplified terms, the interface 141 may be configured to receive the second character string 142. The interface 141 will also be referred to as the second character interface 142.

The timestamp module 100 may be configured to receive a TXD frame, referred to as a second TXD frame, at the TXD input interface 134 in a step k). It is noted that letters i) and j) have been omitted. Step k) as well as the further steps following step k) can be performed after or in parallel to steps a) to h). An example of the second TXD frame 138 is represented as a data block in Figure 7. The second TXD frame 138 comprises a plurality of bits. The second TXD frame 138 may comply with a predefined protocol, in particular a communication protocol, such as a CAN protocol.

The timestamp module 100 may be configured to read metadata 140, referred to as second metadata 140, of the second TXD frame 138 in a step 1). The second metadata 140 may relate to address data, identification data, and or other data of the second RXD frame 138 suitable for identifying the second RXD frame 138. The second metadata 140 is schematically shown as a data block in Figure 7.

The timestamp module 100 may be configured to generate, in a step m), a second character string 142 temporally directly after and/or in response to receiving the second TXD frame 138. The second character string 142 is schematically shown as a data block in Figure 7. The second character string 142 may be formed from a sequence of characters. The second character string 142 may be a unique, second character string 142. As a result, the second character string 142 may serve as an identifier and/or may be configured as such. In an example, the timestamp module 100 generates the second character string 142 temporally directly after and in response to receiving the second TXD frame 138. The timestamp module 100 may be configured to allocate the second character string 142 with the second metadata 140, and/or vice versa. The second character string 142 may be and/or configured to uniquely identify the second metadata 140 and/or the second RXD frame 138. The timestamp module 100 may further be configured to store the second character string 142, the second metadata 140, and the allocation between the second character string 142 and the second metadata 140. As a result, the timestamp module 100 may determine the second metadata 140 based on the second character string 142.

The timestamp module 100 may be configured to transmit both the second TXD frame 138 and the second character string 142 to the data processing unit 106 simultaneously via the TXD output interface 136 in a step n). It is assumed that a possibly existing, time delay between transmitting the second TXD frame 138 and transmitting the second character string 142 is very small, so that it is assumed that the timestamp module 100 can send both, the second TXD frame 138 and the second character string 142 in parallel in time to the data processing unit 106. This is assumed to be true even if the aforementioned potentially small time delay occurs. As a result, the second TXD frame 138 and the second character string 142 may be processed in parallel (in time) by the data processing unit 106.

In an example, a signal link 278 extends from the TXD output interface 136 of the timestamp module 100 to a port 226 of the data processing unit 106. The second TXD frame 138 and the second character string 142 may be transmitted through the TXD output interface 136, the signal link 278, and port 226.

The data processing unit 106 may be configured to generate a second data frame based on the (received) second TXD frame 138. The second data frame may comprise a plurality of bits. The second data frame may satisfy a predefined protocol, such as the protocol of the second RXD frame 138, or another predefined protocol, for example a predefined network protocol, such as an Ethernet protocol. If the second TXD frame 138 is (fully or partially) encrypted, the data processing unit 106 may generate the second data frame by decrypting the second TXD frame 138. For decryption, the data processing unit 106 may, in an example, rely on the MACSec implementation. However, the first data processing unit 106 may not be limited to decrypting data. In an example, the data processing unit 106 may also perform other predefined process steps to generate the second data frame based on the second TXD frame 138. The data processing unit 106 may be configured to route the second character string 142 received at the port 226 through the data processing unit 106 in parallel (in time) with the processing of the second TXD frame 138, such that the data processing unit 106 provides the second data frame at the port 228 and the second character string 142 routed therethrough at the port 234 in parallel in time. Port 228 may be coupled to another port 230 of the transceiver 104 via another signal link 280, such that the second data frame may be transmitted from the data processing unit 106 to the transceiver 104. The port 234 of the data processing unit 106 may be coupled to the second character interface 141 of the timestamp module 100 via another signal link 176, such that the data processing unit 106 may transmit the (passed through) second character string 142 to the second character interface 141 via the signal link 176.

In an example, the transceiver 100 may be configured to generate a second trigger signal temporally directly after and/or in response to a reception of the second data frame (by the transceiver 100). The second trigger interface 137 of the timestamp module 100 may be coupled to the transceiver 104 via another signal link 178. The transceiver 104 may transmit the second trigger signal to the second trigger interface 137 of the timestamp module 100 via the signal link 178.

In an example, the transceiver 104 may be configured to transmit the second trigger signal to the second trigger interface 137 of the timestamp module 100 via the signal link 178 directly following generation of the second trigger signal 137. In an example, the second trigger signal may directly or indirectly represent a second time 146 of receiving the second data frame (at the transceiver 104). If the transceiver 104 generates and transmits the second trigger signal temporally directly after receiving the second data frame, the time at which the timestamp module 100 receives the second trigger signal at the second trigger interface 137 may also represent the second time sufficiently accurately. The same may apply to a potential (small) time delay between when the transceiver 104 receives the second data frame and when it sends the second data frame over the network interface 162. In an example, the timestamp module 100 may subtract a (small) predefined processing time from the time of reception of the second trigger signal to determine the second time 146. Also in this example, it may be assumed that the second trigger signal represents the second time 146 at least indirectly.

Via the second trigger signal, the timestamp module 100 may receive information about the second time 146 of a reception of a second data frame by the transceiver 104 without the need for the timestamp module 100 to be integrated with the transceiver 104. Rather, the data processing unit 106 may be disposed between the transceiver 104 and the timestamp module 100.

The timestamp module 100 may be configured to receive both the second character string 142 at the second character interface 141 and the second trigger signal at the second trigger interface 137 simultaneously in a step o). The second character string 142 is sent to the second character interface 141 by the data processing unit 106. Simultaneously, the data processing unit 106 sends the second data frame to the transceiver 104, which preferably generates and sends the second trigger signal to the second trigger interface 137 directly after and in response to receiving the second data frame. The time delay for generating the second trigger signal may be assumed to be so small, that it can be neglected. Therefore, it may be assumed that the second character string 142 and the second trigger signal are transmitted to the timestamp module 100 simultaneously.

As previously discussed, the timestamp module 100 may be configured to determine the second metadata 140 based on the second character string 142. In an example, the timestamp module 100 may determine the second metadata 140 based on the second character string 142 received by the timestamp module 100 in step o) via the second character interface 141.

The timestamp module 100 may be configured to allocate the second time 146 with the (determined) second metadata 140 in a step p) such that the allocation results in a second data group 148, wherein the second data group 148 comprising the second time 146 and the (determined) second metadata 140. The second data group 148 may be used to synchronize internal clocks of nodes 156 of a system 154.

The timestamp module 100 may be configured to provide and/or transmit the second data group 148 via the control interface 116 in a preferably optional step q). The timestamp module 100 may transmit the second data group 148 to a control unit of a node 156 via the first control interface 116. The transmission may comprise the control unit retrieving the second data group 148 from the timestamp module 100. In this example, the node 156 may comprise the timestamp module 100.

Synchronization of the internal clocks of the nodes 156 may be based on timestamps and/or each representing a point in time. This point in time may also be referred to as a reference time. One of the nodes 156 of the system 154, as shown schematically in Figure 1 for example, may transmit such a frame to the other node 156 of the system 154, the frame representing a time stamp. The frame may be configured according to precision time protocol, PTP.

During operation of the system 154, not every frame exchanged between two nodes 156 may represent a timestamp. In an example, it is possible that only one exchanged frame of multiple frames exchanged between nodes 156 represents a timestamp. Against this background, it may be appropriate for step q) to be performed in an example only if the bits of the second TXD frame 138 and/or the bits of the second data frame 138 represent a timestamp. The timestamp may be referred to as a second timestamp.

The timestamp module 100 may be configured to perform the following steps k.1) and k.2) between step k) and step q). The timestamp module 100 may be configured to detect, in step k.1), whether the second TXD frame 138 and/or the bits of the second TXD frame 138 represent a second timestamp. The timestamp module 100 may further be configured, in step k.2), to prevent and/or skip transmitting and/or providing the second data group 148 (the step q)) if it is detected in step k.1) that the second TXD frame 138 and/or the bits of the second TXD frame 138 represent a second timestamp. The timestamp module 100 may further be configured to additionally prevent and/or skip step p) in step k.2) if it was detected in step k.1) that the second TXD frame 138 and/or the bits of the second TXD frame 138 represent the second timestamp. By skipping and/or preventing step q), and optionally further skipping/preventing step p), the computational effort for the timestamp module 100 may be reduced.

The timestamp module 100 may comprise a second generator 150. The second generator 150 may be configured to generate the second character string 152. In an example, the TXD output interface 136 is coupled to the second generator 150 via another signal link 283. If the timestamp module 100 receives the second TXD frame 138, the timestamp module 100 may control the second generator so that the second generator 150 generates the second character string 152.

The timestamp module 100 may comprise another unit 222, which may be referred to and/or configured as a second parser 222. The second parser 222 may be coupled to the TXD input interface 134 via another signal link 284. The second parser 222 may be configured to forward a second TXD frame 138 received via the TXD input interface 134 to the TXD output interface 136. Further, the second parser 222 may be configured to generate a control signal temporally directly after and/or in response to receiving the second TXD frame 138 via the TXD input interface 134. Directly after generation, the second parser 222 may send the control signal to the second generator 150 via the signal link 283. It may be assumed that a temporal relationship to the generation and sending of the control signal is sufficiently small that the second generator 150 receives the control signal temporally directly after and/or in response to the receipt of the second TXD frame 138 by the timestamp module 100. Subsequently, the second generator 150 may generate the second character string 142 temporally directly after and/or in response to the receipt of the second TXD frame 138 by the timestamp module 100 and/or send the second character string 142 via the TXD output interface 136 temporally in parallel with the second TXD frame 138.

The timestamp module 100 may comprise another unit 224, which may be referred to as timestamp unit 224. The time stamp unit 224 may be configured to perform steps o), p), and/or q).

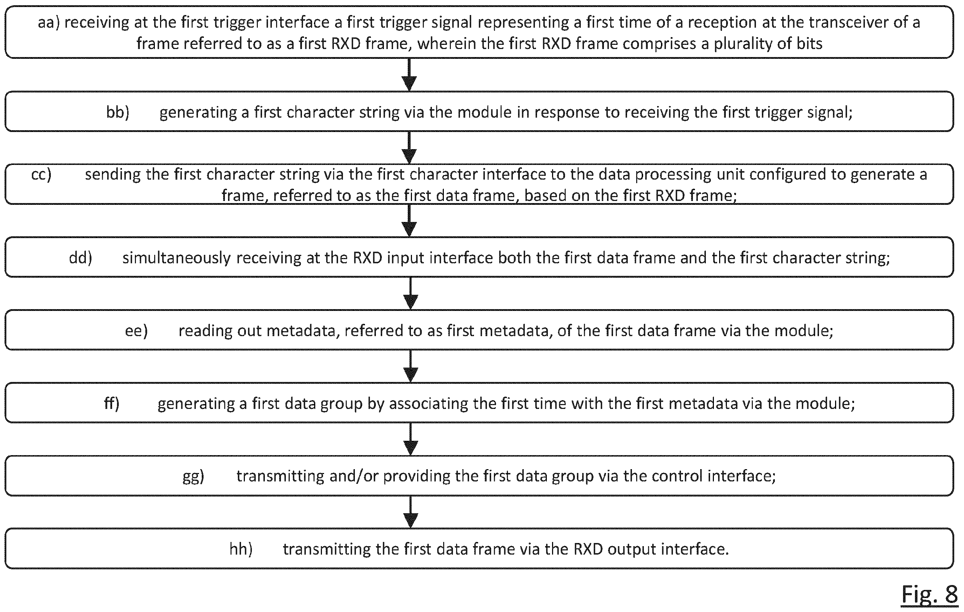

Figure 8 schematically illustrates a flow chart an example of a method for a timestamp module 100 for a communication device 100, wherein the communication device comprising a transceiver 104 and a data processing unit 106, wherein the timestamp module 100 comprises: a receive data, RXD, input interface 108, an RXD output interface 110, an interface referred to as a first trigger interface 112, a further interface referred to as a first character interface 114, and a further interface referred to as a control interface 116, and wherein the method comprises the following steps:
aa) receiving at the first trigger interface 112 a first trigger signal representing a first time 118 of a reception at the transceiver 104 of a frame referred to as a first RXD frame 120, wherein the first RXD frame 120 comprises a plurality of bits;
bb) generating a first character string 122 via the timestamp module 100 in response to receiving the first trigger signal;
cc) sending the first character string 122 via the first character interface 114 to the data processing unit 106 configured to generate a frame, referred to as the first data frame, based on the first RXD frame 120;
dd) simultaneously receiving at the RXD input interface 108 both the first data frame and the first character string 122;
ee) reading out metadata, referred to as first metadata 126, of the first data frame via the timestamp module;
ff) generating a first data group 128 by associating the first time 118 with the first metadata 126 via the timestamp module 100;
gg) transmitting and/or providing the first data group 128 via the control interface 116; and
hh) transmitting the first data frame via the RXD output interface 110.

For the method, reference is made to the preceding explanations, example features, technical effects and/or advantages in an analogous manner as explained for the timestamp module 100.

Although the described exemplary embodiments disclosed herein focus on devices, systems, and methods for using same, the present disclosure is not necessarily limited to the example embodiments illustrate herein. For example, various embodiments of providing

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium. More specific examples (non-exhaustive list) of the computer-readable medium may include the following: an electrical connection having one or more wires, a portable computer diskette, a random-access memory (RAM), a read-only memory (ROM), an erasable programmable read-only memory (EPROM or Flash memory), an optical fiber, a portable compact disc read-only memory (CDROM), a digital versatile disc (DVD), a Blu-ray disc (BD), and a memory card.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

Unless stated otherwise, terms such as "first" and "second" are used to arbitrarily distinguish between the elements such terms describe. Thus, these terms are not necessarily intended to indicate temporal or other prioritization of such elements.

## Claims

1. A module for a communication device comprising a transceiver and a data processing unit, wherein the module comprises:
a receive data, RXD, input interface,
an RXD output interface,
an interface referred to as a first trigger interface
a further interface referred to as a first character interface, and
a further interface referred to as a control interface,
wherein the module is configured to perform the following steps:
a) receiving, at the first trigger interface, a first trigger signal representing a first time of reception, at the transceiver, of a frame referred to as a first RXD frame, wherein the first RXD frame comprises a plurality of bits;
b) generating a first character string in response to receiving the first trigger signal;
c) transmitting the first character string via the first character interface to the data processing unit configured to generate a frame, referred to as the first data frame, based on the first RXD frame; and
d) simultaneously receiving at the RXD input interface both the first data frame and the first character string;
e) reading out metadata, referred to as first metadata, of the first data frame;
f) generating a first data group by associating the first time with the first metadata;
g) transmitting and/or providing the first data group via the control interface; and
h) transmitting the first data frame via the RXD output interface.

2. The module according to the preceding claim, wherein the module is configured to perform step b) directly after step a), and to perform step c) directly after step b).

3. The module according to any of the preceding claims, wherein the first metadata is suitable for identifying the first data frame.

4. The module according to any of the preceding claims, wherein the module is configured to generate a unique character string in step b).

5. The module according to any of the preceding claims, wherein the module comprises a first generator configured to generate the first character string.

6. The module according to the preceding claim, wherein the first generator is coupled to the first character interface, and wherein the first generator is configured to transmit the first character string via the first character interface.

7. The module according to any of the preceding claims, wherein the module is configured to perform the following steps d.1) to d.2) between step d) and step g):
d.1) detecting whether the first data frame represents a first timestamp;
d.2) if the first data frame does not represent a first time stamp, preventing and/or skipping step g) and preferably at least one of steps e) to f).

8. The module according to any of the preceding claims, wherein the module further comprises:
a transmit data, TXD, input interface,
a TXD output interface,
an interface referred to as a second trigger interface, and
a further interface referred to as a second character interface,
wherein the module is configured to perform the following steps:
k) receiving a second TXD frame at the TXD input interface, the second TXD frame comprising a plurality of bits;
l) reading out metadata, referred to as second metadata, of the second TXD frame;
m) generating a second character string in response to receiving the second TXD frame;
n) simultaneously transmitting, via the TXD output interface, both the second TXD frame and the second character string to the data processing unit configured to generate a frame, referred to as a second data frame, based on the second TXD frame;
o) simultaneously receiving both the second character string at the second character interface from the data processing unit and a second trigger signal at the second trigger interface from a second transceiver of the communication device, wherein the second trigger signal represents a second time of a reception of the second data frame at the second transceiver
p) generating a second data group by associating the second time with the second metadata; and
q) transmitting and/or providing the second data group via the control interface.

9. The module according to the preceding claim, wherein the module comprises a second generator configured to generate the second character string.

10. The module according to the preceding claim, wherein the second generator is configured to transmit the second character string via the TXD output interface.

11. The module according to any of the preceding claims 8 to 10, wherein the module is configured to perform the following steps k.1) to k.2) between step k) and step q):
k.1) detecting whether the second TXD frame represents a second timestamp; and
k.2) if the second TXD frame does not represent a second time stamp, preventing and/or skipping step q) and preferably at least one of steps 1) to P).

12. A communication device comprising:
a transceiver,
a data processing unit, and
a module according to any of the preceding claims 1 to 7.

13. The communication device according to the preceding claim, wherein the communication device further comprises a second transceiver, and wherein the module is configured according to any of claims 8 to 11.

14. A method for a module for a communication device comprising a transceiver and a data processing unit, wherein the module comprises: a receive data, RXD, input interface, an RXD output interface, an interface referred to as a first trigger interface, a further interface referred to as a first character interface, and a further interface referred to as a control interface, and wherein the method comprises the following steps:
aa) receiving at the first trigger interface a first trigger signal representing a first time of a reception at the transceiver of a frame referred to as a first RXD frame, wherein the first RXD frame comprises a plurality of bits;
bb) generating a first character string via the module in response to receiving the first trigger signal;
cc) sending the first character string via the first character interface to the data processing unit configured to generate a frame, referred to as the first data frame, based on the first RXD frame;
dd) simultaneously receiving at the RXD input interface both the first data frame and the first character string;
ee) reading out metadata, referred to as first metadata, of the first data frame via the module;
ff) generating a first data group by associating the first time with the first metadata via the module;
gg) transmitting and/or providing the first data group via the control interface; and
hh) transmitting the first data frame via the RXD output interface.

15. The method according to the preceding claim, wherein the module further comprises: a transmit data, TXD, input interface, a TXD output interface, an interface referred to as a second trigger interface, and a further interface referred to as a second character interface, and wherein the method further comprises the steps of:
kk) receiving a second TXD frame at the TXD input interface, wherein the second TXD frame comprises a plurality of bits;
ll) reading out metadata, referred to as second metadata, of the second TXD frame via the module;
mm) generating a second character string in response to receiving said second TXD frame via said module;
nn) simultaneously transmitting, via the TXD output interface, both the second TXD frame and the second character string to the data processing unit configured to generate a frame, referred to as the second data frame, based on the second TXD frame;
oo) simultaneously receiving both the second character string at the second character interface from the data processing unit and a second trigger signal at the second trigger interface, wherein the second trigger signal represents a second timing of a reception of the second data frame at a second transceiver of the communication apparatus;
pp) generating a second data group by associating the second time with the second metadata via the module; and
qq) transmitting and/or providing the second data group via the control interface.
